# EUROPEAN PATENT SPECIFICATION

(11) **EP 2 042 705 B1**
(45) Date of publication and mention of the grant of the patent: **13.06.2012**
(21) Application number: 07117506.1
(22) Date of filing: 28.09.2007
(51) Int. Cl.: F02B 41/10, F02B 37/013, F02B 37/10, F02B 39/06, F02B 39/08, F16H 1/28

(54) **Supercharged turbocompound engine**
Aufgeladene Turbo-Compound-Brennkraftmaschine
Moteur suralimenté du type turbo-compound

(43) Date of publication of application: 01.04.2009
(73) Proprietor: Iveco Motorenforschung AG, 9320 Arbon (CH)
(72) Inventor: Jaeger, Laurentius, 8048, Zuerich (CH)
(74) Representative: Borsano, Corrado

(56) References cited:
- EP-A- 0 417 732
- WO-A-92/02719
- DE-A1- 3 807 372
- DE-A1-102005 003 714
- JP-A- 1 170 729
- US-A- 4 897 998

## Description

### FIELD OF THE INVENTION

The present invention relates to a supercharged turbocompound engine apparatus in particular for a vehicle, but also for other means of transport, such as a ship.

### PRIOR ART

Two-stage turbocharging has been proposed as a means of achieving high efficiency in engines, in particular heavy duty diesel engines, such as those for industrial vehicles or ships. Two turbosuperchargers are placed in series on the engine intake line, driven by turbines placed on the exhaust line, which can also be placed in series, or arranged in another way. Two-stage turbocharging enables cooling to be performed between the two stages of compression in a specific intercooler, which increases overall engine efficiency.

In other engines, the energy from the exhaust gases that is recuperated in a turbine is transmitted to the drive shaft via a mechanical link between the turbine and the drive shaft. The mechanical link usually ensures an adequate velocity ratio between the rotation of the turbine and that of the engine, said ratio being approximately more than 25, given the machine's characteristics. Said mechanical link usually comprises a system, which can be a viscous coupling element, to reduce the variations in the rotational speed. The turbine connected to the engine is usually placed downstream with respect to a turbine suitable to drive a turbosupercharger; the turbines are sometimes arranged in parallel. These engines, known as turbocompound engines, are high performance engines, especially in terms of efficiency.

Diesel engines increasingly include an exhaust gas recirculation circuit, usually between a point upstream in order to reduce pollutant emissions, in particular nitrogen oxides. In certain conditions the flow rate of the recirculating gases, regulated by specific devices, is very high. In such conditions the turbocompound system results in a loss of efficiency and a reduction in the pressure stage available for supercharging, making it difficult to maintain adequate boost pressure. It is also inadequate when the engine must be used for engine braking.

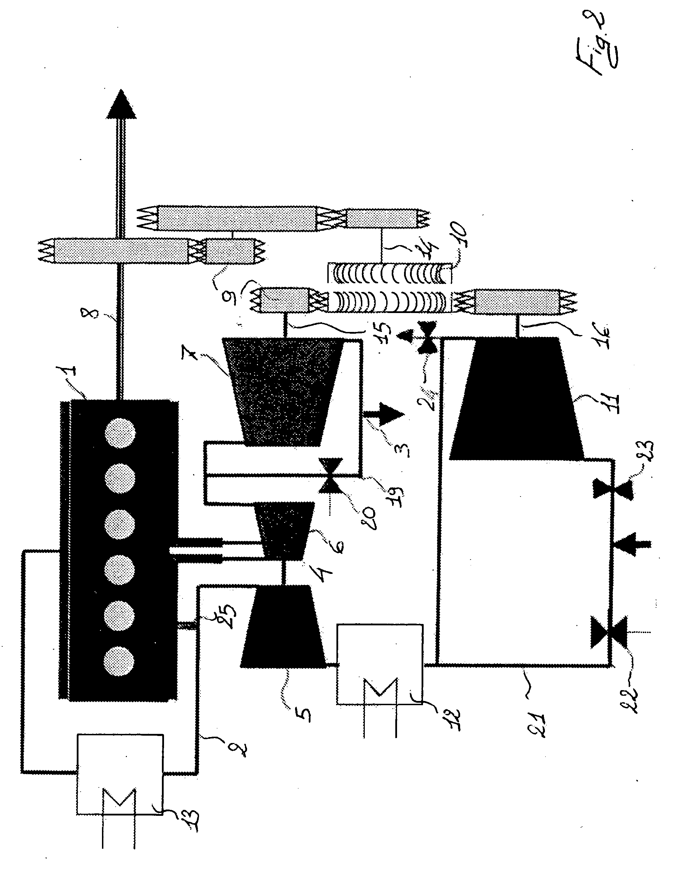

DE102005003714 discloses a turbocompound engine apparatus, whose features are described in the preamble of claim 1, and is also illustrated in figure 2.

It would therefore be desirable to produce a turbocompound engine whereby high boost pressures can be achieved under all conditions, whenever required, and that is capable of responding rapidly to said requests for pressure, while maintaining a high level of efficiency. Moreover, it would be desirable to ensure efficiency also during engine braking. It is also desirable not to increase the complexity of the engine in terms of the number of components.

### SUMMARY

The problems described above have now been solved according to the present invention by a turbocompound engine apparatus according to claim 1.

According to an embodiment of the invention, the engine apparatus comprises a mechanical link between said engine and said second turbine and second supercharger, said link preferably including a hydraulic coupling element between said engine and said turbine and supercharger. According to a preferred embodiment, speed reduction means are provided between the engine and the second turbine and between the engine and second supercharger.

According to an embodiment of the invention the first and second turbines are placed in parallel.

The superchargers are preferably placed in series on the intake line, more preferably the second supercharger (the low pressure supercharger) is placed upstream with respect to the first on said line.

The invention relates in particular to that set forth in the claims, which are attached hereto.

### LIST OF DRAWINGS

The present invention will now be illustrated through the following detailed description of preferred but not exclusive embodiments, provided merely by way of example, with the help of the attached drawings of which:
figure 1 is a schematic view of an engine apparatus according to an embodiment of the present invention;
figure 2 is a schematic view of an engine apparatus known from the prior art.

### DETAILED DESCRIPTION OF A PREFERRED EMBODIMENT

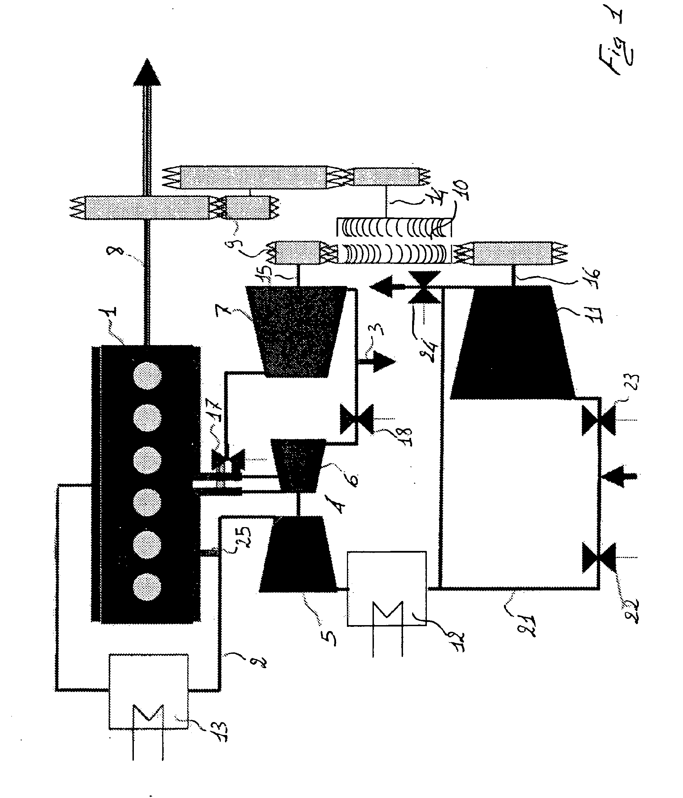

Figures 1 is a schematic illustration of an engine apparatus according to an embodiment of the present invention, respectively in which the first and second turbine are placed in parallel. The same reference numbers are used to indicate similar components. The engine apparatus, for example of an industrial vehicle, of a ship or of another type, comprises the internal combustion engine 1, which can be a diesel engine. It has an intake line 2 and an exhaust line 3. A turbocharging unit 4 comprises a first turbosupercharger 5, driven by the first turbine 6. The first turbine uses the energy of the exhaust gases and can be of a type that is commonly used. The drawing shows a twin scroll turbine, of the type commonly used to compensate the pressure waves normally present in the exhaust line of a reciprocating engine. Other types of turbine can be chosen, including variable geometry turbines. The second turbine 7 is also arranged on the exhaust line 3. According to the embodiment illustrated in figure 1 it is placed in parallel to the first turbine, in the prior art as illustrated in figure 2 it is placed in series; in that case, it is arranged downstream with respect to the first turbine. The second turbine is connected to the drive shaft 8 by means of a mechanical link 9 that can comprise a series of gear drives, belt drives or drives of any other suitable type, and, driven by the exhaust gases, it supplies energy to the shaft 8. The link preferably comprises means to reduce the speed variations, preferably a hydraulic coupling element 10 of a known type, placed between the second turbine and drive shaft. The link ensures an adequate velocity ratio between the engine and turbine, as in the case of conventional turbocompound engines.

The mechanical link 9 also connects the second supercharger 11, arranged on the intake line, to the engine and to the second turbine. The second supercharger is preferably placed upstream with respect to the first supercharger, and constitutes a first compression stage. An intercooler 12 can be placed between the second supercharger and the first turbosupercharger, while an aftercooler 13 can be placed downstream with respect to the first turbosupercharger, to increase efficiency and reduce the volume of the air, as in the case of two-stage turbocharged engines. The second supercharger can receive mechanical energy from the engine 1 or also from the second turbine 7 via the link 9. According to an embodiment of the invention, the second supercharger can be a positive displacement supercharger, while according to a preferred embodiment, it can be a turbosupercharger, in particular a centrifugal turbosupercharger, like the first turbosupercharger. The link 9 enables an adequate velocity ratio to be achieved simply and without any particular complexity between the engine and supercharger, which can thus be driven at a suitable speed for a turbosupercharger, which is simpler and usually less subject to wear or faults than a positive displacement supercharger. The velocity ratio with respect to the engine is preferably similar for the second turbine and the second supercharger, (in case of a turbosupercharger); according to a possible embodiment the second turbine can have a slightly higher rotational speed (for example a ratio of 10 to 8 with respect to the second supercharger). A different and more suitable ratio may be defined according to specific requirements.

In particular if the second supercharger is a turbosupercharger, the mechanical link is preferably achieved so that the hydraulic coupling element 10 is placed between the engine and the supercharger, while it is not usually necessary for it to be placed between the turbine and supercharger. However, if desired, other solutions are possible also using a number of hydraulic coupling elements. In case of fixed ratios the link can be achieved by means of an appropriate gearing system as illustrated in the drawings.

If desired, the ratio between the rotational speed of the engine and second turbine, and engine and second supercharger, in particular if said supercharger is a turbosupercharger, can be variable, given the characteristic of the head as a function of the revolution speed typical of turbosuperchargers, in order to guarantee an optimum speed thereof and protect them from being driven at excessively high speeds, for example in case of the engine reaching high speeds in low gear during downhill braking. For example an appropriate mechanism can be inserted in the point 14 or in another appropriate point of the link. The mechanism can preferably be an epicycloid gear, more preferably supported by an electric motor to deliver continuous ratio variation; similar mechanisms are known for varying velocity ratios. The ratio between the second turbine and supercharger can be fixed. Alternatively a ratio varying mechanism can also be provided that only acts for the turbine or supercharger (arranged for example on the respective shaft 15 or 16) or a mechanism can be provided for each. This would enable the torque absorbed or delivered or the flow rate through each turbosupercharger to be regulated and would also allow the latter to idle and could also entirely or partially eliminate the need for control means such as throttle valves or by-passes for said turbosupercharger.

In case of positive displacement superchargers, which are more complex to produce, the ratio between the engine revolutions and supercharger revolutions can, however, easily be fixed, given their specific proportional flow rate/rotational speed.

In figure 1, the first and second turbine are placed in parallel. The flow rate through the second turbine, and thus the energy delivered thereby to the engine, and/or second supercharger, are regulated using the control valve 17. This solution also reduces the need for the first turbine to be a variable geometry turbine. A valve 18 downstream with respect to the first turbine, preferable only of the latter, can be used as an engine brake, further increasing exhaust back pressure.

In the case of the prior art as shown in figure 2, the second turbine is placed in series with the first and both can intercept the entire exhaust gas flow. The energy of the second turbine can be controlled by regulating the by-pass 19 using the relative control valve 20.

The second supercharger is preferably placed in series with the first. Various alternatives are possible in order to regulate the absorbed power as required and according to the relative head that is generated. Such solutions consist of the by-pass 21, with relative control valve 22, the control valve 23 on the delivery line or preferably on the intake line, as illustrated, the relief valve (to reduce the head) 24. As is normally the case, an exhaust gas recirculation line 25 is provided and is suitable to convey a preferably adjustable part of the exhaust gases leaving the engine from the exhaust line back to the intake line. Conventional means, if necessary, such as venturis, pumps, control valves, can be used to guarantee the adequacy of the flow rate. The recirculation line is shown on the high pressure side of the turbosupercharger, which is a preferred, but not exclusive embodiment of the invention.

The present invention introduces some considerable advantages: as the second supercharger can be driven by the engine this guarantees a rapid response, in terms of boost pressure, to the request for engine power, especially during acceleration, whereas turbines tend to react more slowly as they depend on the flow rate of the engine exhaust gases and are strongly influenced by the recirculation flow rate if on the high pressure side. It can provide boost pressure, absorbing more power from the engine during engine braking, while the second turbine can be excluded or made inactive in the ways described above, to improve overall braking efficiency.

The second turbine can be used to deliver torque to the engine as in ordinary turbocompound engines and to drive the second supercharger, thus implementing a second stage of turbocharging, both of which are useful for improving power and efficiency at high loads. The person skilled in the art will be able to design the second turbine in view of this dual purpose and make it bigger than those used in normal turbocompound engines. This invention combines the advantages of turbocompound and two-stage technology, without adding another turbine and fully exploiting the structure of the turbocompound drive system. At low speeds and low loads the second turbine and second supercharger can both be completely or partially excluded or deactivated as described above.

The engine apparatus according to the present invention can be adapted perfectly for use with an exhaust gas recirculation system, as in two-stage supercharged engines.

In particular, the parallel arrangement of the turbines, as in figure 1, enables particularly rapid response times in transient conditions, also with immediate adjustment of the air flow through the second turbine, by means of the valve in order to adapt to variations in the request for power. Said valve also enables the recirculation flow rate to be readily adjusted.

The invention also relates to a vehicle provided with the engine apparatus as described above.

The control means described above are also part of the invention.

## Claims

1. A turbocompound engine apparatus comprising:
an internal combustion engine (1), in particular a diesel engine, having an air intake line (2) and a exhaust line (3);
a first turbosupercharger (5) arranged on said intake line;
a first turbine (6) arranged on said exhaust line suitable to drive said first turbosupercharger;
a second turbine (7) arranged on said exhaust line suitable to supply mechanical energy to said engine;
a second supercharger (11) arranged on said intake line suitable to receive mechanical energy from said engine and/or from said second turbine;
a mechanical link (9) between said engine and said second turbine (7) and second supercharger (11)
the apparatus being **characterized in that** said first (6) and second turbine (7) are arranged in parallel on said exhaust line (2) and **in that** it comprises a valve (17) to regulate the flow of gas through the second turbine in order to regulate the energy delivered thereby to the engine, and/or second supercharger.

2. Engine apparatus according to claim 1, comprising a throttle valve (18) downstream with respect to the first turbine.

3. Engine apparatus according to any of the previous claims, comprising an adjustable by-pass line (21) of said second supercharger.

4. Engine apparatus according to claim 1, wherein said link includes a hydraulic coupling element (10) placed between said engine and said second turbine and supercharger.

5. Engine apparatus according to claim 1, wherein said link comprises speed reduction means between the engine and second turbine.

6. Engine apparatus according to claim 1, wherein said link comprises speed reduction means between the engine and second supercharger.

7. Engine apparatus according to claim 1, wherein said speed reduction means is an epicycloid mechanism and enables continuous regulation of the rotational speed ratio.

8. Engine apparatus according to any of the previous claims, wherein said second supercharger is a turbosupercharger.

9. Engine apparatus according to any of the previous claims, comprising a line (25) for recirculating exhaust gases to said engine.

10. Engine apparatus according to any of the previous claims, comprising a valve (23) to regulate the flow rate through said second supercharger.

11. Engine apparatus according to any of the previous claims, comprising a valve (24) to regulate the head of said second supercharger.

12. Engine apparatus according to any of the previous claims, wherein said second supercharger is arranged upstream with respect to the first supercharger on said exhaust gas line.

13. Engine apparatus according to any of the previous claims, comprising one or more coolers (12, 13), arranged appropriately on said intake line.

14. Engine apparatus for a vehicle, in particular an industrial vehicle, according to any of the previous claims.

15. Method of controlling an engine apparatus according to any of the previous claims, for use as an engine brake, comprising the complete or partial exclusion or deactivation of said second turbine.

16. Method of controlling an engine apparatus according to any of the previous claims, in particular for use at low loads and low speeds, comprising the complete or partial exclusion or deactivation of said second supercharger.

17. Vehicle, in particular an industrial vehicle provided with the engine apparatus according to claim 14.

## Patentansprüche

1. Turboverbundmotorvorrichtung, umfassend:
einen Verbrennungsmotor (1), insbesondere einen Dieselmotor, mit einer Luftansaugleitung (2) und einer Abgasleitung (3);
einen ersten Turbosuperlader (5), der an der Ansaugleitung angeordnet ist;
eine erste Turbine (6), die an der Abgasleitung angeordnet und derart geeignet ist, den ersten Turbosuperlader anzutreiben;
eine zweite Turbine (7), die an der Abgasleitung angeordnet und derart geeignet ist, mechanische Energie an den Motor zu liefern;
einen zweiten Superlader (11), der an der Ansaugleitung angeordnet und derart geeignet ist, mechanische Energie von dem Motor und/oder von der zweiten Turbine aufzunehmen;
eine mechanische Verbindung (9) zwischen dem Motor und der zweiten Turbine (7) und dem zweiten Superlader (11),
wobei die Vorrichtung **dadurch gekennzeichnet ist, dass** die erste (6) und zweite Turbine (7) parallel an der Abgasleitung (2) angeordnet sind und dass sie ein Ventil (17) umfasst, um die Gasströmung durch die zweite Turbine so zu regulieren, dass die Energie, die **dadurch** an den Motor und/oder den zweiten Superlader geliefert wird, reguliert wird.

2. Motorvorrichtung nach Anspruch 1,
mit einem Drosselventil (18) stromabwärts in Bezug auf die erste Turbine.

3. Motorvorrichtung nach einem der vorhergehenden Ansprüche,
mit einer einstellbaren Bypassleitung (21) des zweiten Superladers.

4. Motorvorrichtung nach Anspruch 1,
wobei die Verbindung ein hydraulisches Kopplungselement (10) aufweist, das zwischen dem Motor und der zweiten Turbine und dem Superlader angeordnet ist.

5. Motorvorrichtung nach Anspruch 1,
wobei die Verbindung ein Untersetzungsmittel zwischen dem Motor und der zweiten Turbine umfasst.

6. Motorvorrichtung nach Anspruch 1,
wobei die Verbindung ein Untersetzungsmittel zwischen dem Motor und dem zweiten Superlader umfasst.

7. Motorvorrichtung nach Anspruch 1,
wobei das Untersetzungsmittel ein Epizykloidenmechanismus ist und eine kontinuierliche Regulierung des Drehzahlverhältnisses ermöglicht.

8. Motorvorrichtung nach einem der vorhergehenden Ansprüche,
wobei der zweite Superlader ein Turbosuperlader ist.

9. Motorvorrichtung nach einem der vorhergehenden Ansprüche,
mit einer Leitung (25) zum Rückführen von Abgasen an den Motor.

10. Motorvorrichtung nach einem der vorhergehenden Ansprüche,
mit einem Ventil (23), um den Durchfluss durch den zweiten Superlader zu regulieren.

11. Motorvorrichtung nach einem der vorhergehenden Ansprüche,
mit einem Ventil (24), um die Druckhöhe des zweiten Superladers zu regulieren.

12. Motorvorrichtung nach einem der vorhergehenden Ansprüche,
wobei der zweite Superlader stromaufwärts in Bezug auf den ersten Superlader an der Abgasleitung angeordnet ist.

13. Motorvorrichtung nach einem der vorhergehenden Ansprüche,
mit einem oder mehreren Kühlern (12, 13), die geeignet an der Ansaugleitung angeordnet sind.

14. Motorvorrichtung für ein Fahrzeug, insbesondere ein Industriefahrzeug, nach einem der vorhergehenden Ansprüche.

15. Verfahren zum Steuern einer Motorvorrichtung nach einem der vorhergehenden Ansprüche zur Verwendung als eine Motorbremse, umfassend, dass die zweite Turbine vollständig oder teilweise ausgeschlossen oder deaktiviert wird.

16. Verfahren zum Steuern einer Motorvorrichtung nach einem der vorhergehenden Ansprüche, insbesondere zum Gebrauch bei geringen Lasten und geringen Drehzahlen, umfassend, dass die zweite Turbine vollständig oder teilweise ausgeschlossen oder deaktiviert wird.

17. Fahrzeug, insbesondere ein Industriefahrzeug, das mit der Motorvorrichtung nach Anspruch 14 versehen ist.

## Revendications

1. Appareil moteur à turborécupération, comprenant :
un moteur à combustion interne (1), en particulier un moteur diesel, possédant une conduite d'admission d'air (2) et une conduite d'échappement (3) ;
un premier turbocompresseur (5) agencé sur ladite conduite d'admission ;
une première turbine (6) agencée sur ladite conduite d'échappement appropriée pour entraîner ledit premier turbocompresseur ;
une seconde turbine (7) agencée sur ladite conduite d'échappement, appropriée pour fournir de l'énergie mécanique audit moteur ;
un second compresseur à suralimentation (11) agencé sur ladite conduite d'admission, approprié pour recevoir de l'énergie mécanique à partir dudit moteur et/ou à partir de ladite seconde turbine.
une liaison mécanique (9) entre ledit moteur et ladite seconde turbine (7) et ledit second compresseur à suralimentation (11) ;
l'appareil étant **caractérisé en ce que** lesdites première (6) et seconde turbine (7) sont agencées en parallèle sur ladite conduite d'échappement (2) et **en ce qu'**il comprend une soupape (17) pour réguler l'écoulement de gaz à travers la seconde turbine afin de réguler l'énergie distribuée par celle-ci au moteur et/ou second compresseur à suralimentation.

2. Appareil moteur selon la revendication 1, comprenant un papillon des gaz (18) en aval par rapport à la première turbine.

3. Appareil moteur selon une quelconque des revendications précédentes, comprenant une conduite de dérivation réglable (21) dudit second compresseur à suralimentation.

4. Appareil moteur selon la revendication 1, dans lequel ladite liaison comprend un élément d'accouplement hydraulique (10) placé entre ledit moteur et ladite seconde turbine et ledit compresseur à suralimentation.

5. Appareil moteur selon la revendication 1, dans lequel ladite liaison comprend des moyens de réduction de vitesse entre le moteur et la seconde turbine.

6. Appareil moteur selon la revendication 1, dans lequel ladite liaison comprend des moyens de réduction de vitesse entre le moteur et le second compresseur à suralimentation.

7. Appareil moteur selon la revendication 1, dans lequel lesdits moyens de réduction de vitesse sont un mécanisme épicycloïdal et permettent la régulation continue du rapport de vitesse de rotation.

8. Appareil moteur selon une quelconque des revendications précédentes, dans lequel ledit second compresseur à suralimentation est un turbocompresseur.

9. Appareil moteur selon une quelconque des revendications précédentes, comprenant une conduite (25) pour réaliser la recirculation de gaz d'échappement audit moteur.

10. Appareil moteur selon une quelconque des revendications précédentes, comprenant une soupape (23) pour réguler le débit à travers ledit second compresseur à suralimentation.

11. Appareil moteur selon une quelconque des revendications précédentes, comprenant une soupape (24) pour réguler la hauteur de charge dudit second compresseur à suralimentation.

12. Appareil moteur selon une quelconque des revendications précédentes, dans lequel ledit second compresseur à suralimentation est agencé en amont par rapport au premier turbocompresseur sur ladite conduite de gaz d'échappement.

13. Appareil moteur selon une quelconque des revendications précédentes, comprenant un ou plusieurs refroidisseurs (12, 13), agencés de façon appropriée sur ladite conduite d'admission.

14. Appareil moteur pour un véhicule, en particulier un véhicule industriel, selon une quelconque des revendications précédentes.

15. Procédé de commande d'un appareil moteur selon une quelconque des revendications précédentes, destiné à être utilisé en tant que frein moteur, comprenant l'exclusion ou la désactivation complète ou partielle de ladite seconde turbine.

16. Procédé de commande d'un appareil moteur selon une quelconque des revendications précédentes, en particulier destiné à être utilisé à basses charges et à basses vitesses, comprenant l'exclusion ou la désactivation complète ou partielle dudit second compresseur à suralimentation.

17. Véhicule, en particulier un véhicule industriel, pourvu de l'appareil moteur selon la revendication 14.
